# EUROPEAN PATENT SPECIFICATION

(11) **EP 3 330 114 B1**
(45) Date of publication and mention of the grant of the patent: **28.04.2021**
(21) Application number: 17204801.9
(22) Date of filing: 30.11.2017
(51) Int. Cl.: B60J 11/04

(54) **FULL PROTECTION COVER SHEET FOR VEHICLES PROVIDED WITH IMPROVED CONSTRAINING MEANS TO THE VEHICLE ITSELF**
VOLLSCHUTZPLANE FÜR FAHRZEUGE MIT VERBESSERTEN FIXIERUNGSMITTEL AM FAHRZEUG
TOILE DE PROTECTION COMPLÉTE POUR VÉHICULES AVEC DES MOYENS DE FIXATION AU VÉHICULE MÊME AMÉLIORÉS

(30) Priority: 01.12.2016 IT 201600122179
(43) Date of publication of application: 06.06.2018
(73) Proprietor: Confezioni Andrea Italia S.r.l., 21020 Bodio Lomnago (VA) (IT)
(72) Inventor: TAVELLI, Andrea, 21100 VARESE (IT)
(74) Representative: Di Gennaro, Sergio

(56) References cited:
- US-A- 4 964 667
- US-A1- 2015 174 994
- US-A1- 2016 001 647
- US-A1- 2016 207 385

## Description

The present invention refers to a full protection cover sheet, known as "full body cover", for vehicles, provided with improved constraining means to the vehicle itself.

Such a cover sheet is for example applicable to vehicles that are provided with a front windscreen that joins with the roof of the vehicle itself, like for example automobiles, vans, etc...

For the purposes of the present invention the term "full body cover" is meant to indicate a cover sheet that substantially completely covers the vehicle, excluding for example at least the wheels and the windscreen, on which a transparent film is applied, in any case making it possible to drive the vehicle in safe conditions.

European patent application EP2749441 to the same Applicant and document US 2016/207385 A1 describe a cover sheet of such a type.

Currently, automobile manufacturers, car dealerships and spare parts shops have various types of covers for vehicles, adapted for being used to protect from the weather, for acts of vandalism and from accidental collisions; such accessories protect the exterior finish and the bodywork of the parked automobile.

The same type of cover is also normally used to protect the vehicle during the movement thereof, which must necessarily be carried out to transport it from one location to another, for example to drive it from the production factory to the final seller.

Such movements, however, require the use of 18-wheelers, ferries and other means of transport and can take a long time for final delivery, depending on the distance between the production area and the delivery location to the client.

The use of conventional covers during the movement of vehicles from production factories to the buyers has a series of substantial drawbacks.

During transportation, the vehicle is subjected to the air that hits the front thereof, the force of which can even be substantial at high speeds reached by the means that transports the vehicle itself.

The phenomenon of air in the opposite direction hits in particular on the area of the windscreen of the vehicle and can result in strong stresses on the cover sheet that covers the vehicle in such an area and in particular in the area that joins the roof of the vehicle to the windscreen.

The consequence of this can be the lifting of the cover sheet from the roof of the vehicle, with formation of a sack beneath it. Such a situation over an extended period can lead to the cover tearing and even definitively detaching from the vehicle, resulting in the loss of protection on the vehicle itself but also a possible danger for the vehicles that travel close to the means of transport from which the cover is freed. The purpose of the present invention, therefore, is to make a protective cover sheet for vehicles, which avoids the aforementioned drawbacks, i.e. that avoids sudden detachments, in particular in the front area of the covered vehicle.

Such purposes are achieved by a protective cover sheet for vehicles adapted for being held and locked, through fixing means, on said vehicle, so as to cover the body thereof.

Further purposes and advantages of the present invention will become clear from the following description and from the attached drawings, provided purely as an example and not for limiting purposes, in which:

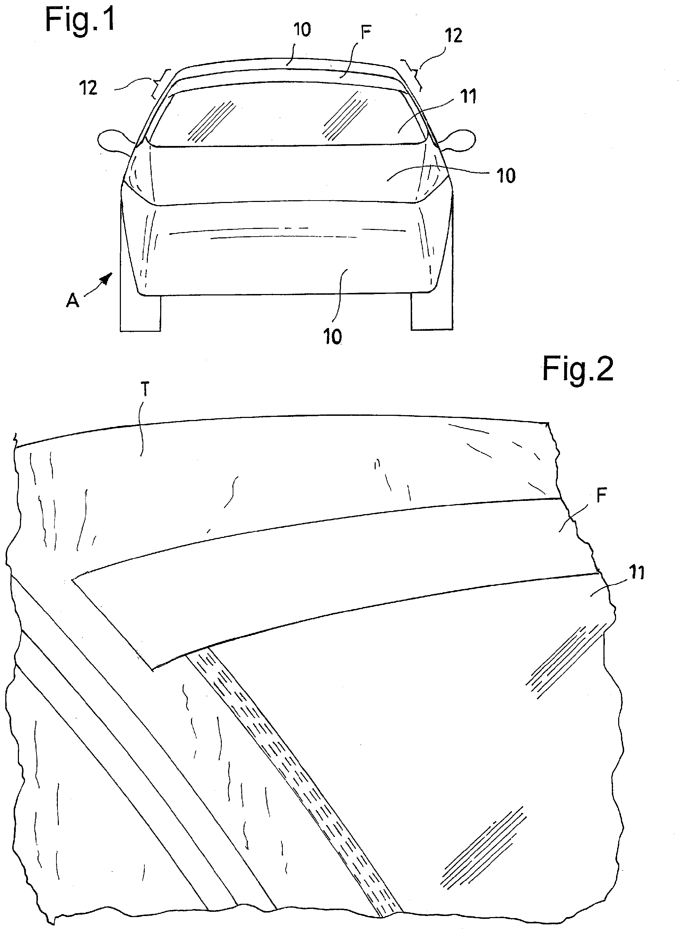

- figure 1 represents a schematic front perspective view (from the bonnet side) of the vehicle of an automobile to which the cover sheet according to an embodiment of the present invention is applied;
- figure 2 is a portion of figure 1, taken in the area of the upper left corner of the windscreen;

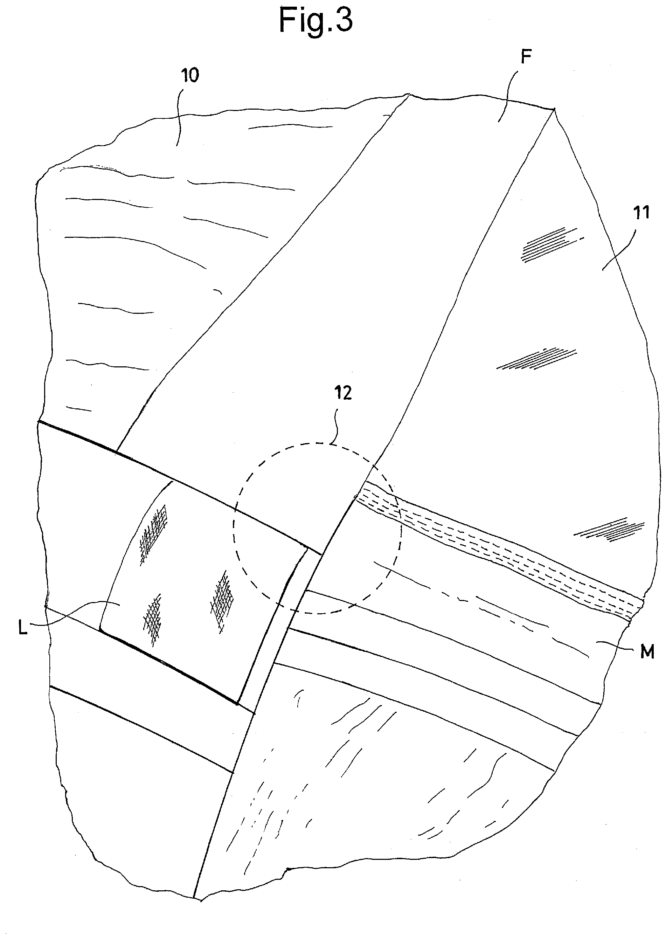

- figure 3 is a portion of figure 1, taken in the area of the upper right corner of the windscreen;

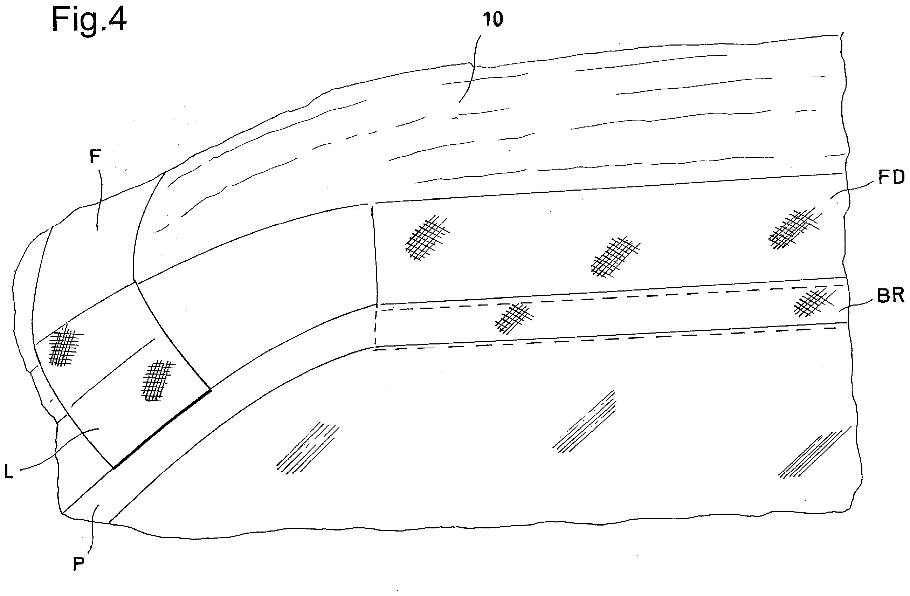

- figure 4 is a portion of a side view of the vehicle, taken in the area of the upper left corner of the windscreen at the upper edge of the door.

With reference to the aforementioned figures, the full protection cover sheet 10 of the vehicle covers the body of the vehicle itself and as an example is arranged on an automobile A.

In the present invention said structure is applicable to different types of vehicle, like for example vans, SUVs, etc...

Said structure comprises a cover sheet 10 that in the portion of the vehicle illustrated covers the bonnet, side portions of the doors and the roof of the vehicle itself. The cover sheet is of the "full body cover" type as already indicated earlier.

The cover sheet is conventionally constrained to the vehicle by suitable fastening means in the lower area of the vehicle itself and by adhesive tapes that are positioned under the edges of the cover sheet, for example in the perimeter area of such an opening for the windscreen 11.

According to the present invention means are provided for constraining the cover sheet to the vehicle positioned at opposite ends 12 of the junction area of the windscreen 11 to the roof T of the vehicle.

Such constraining means ensure better adherence of the cover sheet to the roof and prevent it from being able to lift, as indicated earlier when the drawbacks of known cover sheets were described.

According to an embodiment, such constraining means comprise a pair of flaps L that extend outward and that are adapted for being turned down so as to adhere on the pillar M of the vehicle on the edges of the cover sheet in such opposite ends 12.

Such flaps L can be fixed in the doors P and/or glued directly on the pillar and/or fastened to it or on the profile above the door.

According to a further embodiment, such constraining means comprise a pair of hems FD always positioned at the opposite ends 12 of said junction area between windscreen and roof of the vehicle, which extend towards the rear of the vehicle, and which overlap on the substantially horizontal upper portion of the doors. Such hems have a turned edge BR on their lower portion to form a thickness. Possibly, a material can be comprised in such a turned edge that is adapted for increasing the volume of said edge. Moreover, advantageously an adhesive or a hook can be comprised on such a turned edge (BR).

The constraining means can comprise the flaps L and/or the hems FD depending on the shape, size or type of the vehicle.

Finally, in addition and in combination with such constraining means, according to the present invention stiffening means can be provided on the cover sheet at such a junction area between the windscreen and the roof of the vehicle. Such means comprise a substantially rectangular band F of reinforced and/or less elastic material than that provided for the cover sheet.

Such a band F can also extend on the entire surface of the vehicle roof.

## Claims

1. Full body cover sheet (10) for a vehicle, said cover sheet being constrained to the vehicle by suitable fastening means in the lower area of the vehicle itself and/or by adhesive tapes that are positioned under the edges of the cover sheet, said cover sheet comprising means for constraining the cover sheet to the vehicle substantially positioned at the opposite ends (12) of the junction area between the windscreen and the roof, such constraining means comprise a pair of hems (FD) always positioned at the ends of said upper edges (12) of the cover sheet, extending towards the rear of the vehicle, superimposed on the substantially horizontal upper portion of the doors, such hems having a turned edge (BR) on their lower portion to form a thickness
**characterized in that** said constraining means comprise , over the junction area, a substantially rectangular band (F) of reinforced and/or less elastic material than that provided for the cover sheet and **in that**
an adhesive or a hook is comprised on such turned edge (BR) .

2. Cover sheet according to claim 1, wherein such constraining means comprise a pair of flaps (L) positioned in such opposite ends (12) of the cover sheet, extending outwardly and adapted to be turned down so as to adhere to the pillar (M) of the vehicle.

3. Cover sheet according to claim 2, wherein such flaps (L) can be fixed inside the doors (P) and/or directly glued on the pillar and/or fastened to it or on the profile above the door.

4. Cover sheet according to claim 1, wherein, in addition or in combination with such constraining means, stiffening means may be provided on the cover sheet at such junction area between the windscreen and the vehicle roof.

5. Cover sheet according to claim 1, wherein such band (F) extends on the entire surface of the vehicle roof.

## Patentansprüche

1. Karosserieabdeckplane (10) für ein Fahrzeug, wobei die Abdeckplane durch geeignete Befestigungsmittel im unteren Bereich des Fahrzeugs selbst und/oder durch Klebebänder, die unter den Rändern der Abdeckplane positioniert sind, an dem Fahrzeug befestigt ist, wobei die Abdeckplane Mittel zum Befestigen der Abdeckplane am Fahrzeug umfasst, die im Wesentlichen an den gegenüberliegenden Enden (12) des Verbindungsbereichs zwischen der Windschutzscheibe und dem Dach positioniert sind, solche Einspannmittel ein Paar von Säumen (FD) umfassen, die immer an den Enden der oberen Ränder (12) der Abdeckplane positioniert sind, sich in Richtung der Rückseite des Fahrzeugs erstrecken und auf dem im Wesentlichen horizontalen oberen Abschnitt der Türen aufliegen, wobei solche Säume eine umgeschlagene Kante (BR) an ihrem unteren Abschnitt aufweisen, um eine Dicke zu bilden
**dadurch gekennzeichnet, dass** die Einspannmittel über dem Verbindungsbereich ein im Wesentlichen rechteckiges Band (F) aus verstärktem und/oder weniger elastischem Material als das für die Abdeckplane vorgesehene umfassen und dass ein Klebstoff oder ein Haken an einer solchen umgebogenen Kante (BR) vorgesehen ist.

2. Abdeckplane nach Anspruch 1, wobei solche Einspannmittel ein Paar von Klappen (L) umfassen, die an solchen gegenüberliegenden Enden (12) der Abdeckfolie positioniert sind, sich nach außen erstrecken und geeignet sind, nach unten gedreht zu werden, um an der Säule (M) des Fahrzeugs zu haften.

3. Abdeckplane nach Anspruch 2, wobei solche Klappen (L) innerhalb der Türen (P) und/oder direkt auf die Säule geklebt und/oder an dieser oder an dem Profil oberhalb der Tür befestigt werden können.

4. Abdeckplane nach Anspruch 1, wobei zusätzlich oder in Kombination mit solchen Einspannmitteln Versteifungsmittel an der Abdeckplane an einem solchen Verbindungsbereich zwischen der Windschutzscheibe und dem Fahrzeugdach vorgesehen sein können.

5. Abdeckplane nach Anspruch 1, wobei sich ein solches Band (F) über die gesamte Fläche des Fahrzeugdachs erstreckt.

## Revendications

1. Bâche de protection de carrosserie complète (10) pour un véhicule, ladite bâche de protection étant fixée au véhicule par des moyens de fixation appropriés dans la zone inférieure du véhicule lui-même et/ou par des bandes adhésives qui sont positionnées sous les bords de la bâche de protection, ladite bâche de protection comprenant des moyens pour fixer la bâche de protection au véhicule considérablement positionnés aux extrémités opposées (12) de la zone de jonction entre le pare-brise et le toit, ces moyens de fixation comprennent une paire d'ourlets (FD) toujours positionnés aux extrémités desdits bords supérieurs (12) de la bâche de protection, s'étendant vers l'arrière du véhicule, superposés à la partie supérieure considérablement horizontale des portes, de tels ourlets ayant un bord retourné (BR) sur leur partie inférieure pour former une épaisseur
**caractérisée en ce que** lesdits moyens de fixation comprennent, sur la zone de jonction, une bande considérablement rectangulaire (F) en matériau renforcé et/ou moins élastique que celui prévu pour la bâche de protection et **en ce qu'**un adhésif ou un crochet est compris sur ce bord retourné (BR).

2. Bâche de protection selon la revendication 1, où ces moyens de fixation comprennent une paire de rabats (L) positionnés dans des extrémités opposées (12) de la bâche de protection, s'étendant vers l'extérieur et adaptés pour être rabattus de manière à adhérer au montant (M) du véhicule.

3. Bâche de protection selon la revendication 2, où ces rabats (L) peuvent être fixés à l'intérieur des portes (P) et/ou directement collés sur le montant et/ou fixés à celui-ci ou sur le profilé au-dessus de la porte.

4. Bâche de protection selon la revendication 1, où, en plus ou en combinaison avec de tels moyens de fixation, des moyens de raidissement peuvent être prévus sur la bâche de protection dans la zone de jonction entre le pare-brise et le toit du véhicule.

5. Bâche de protection selon la revendication 1, où une telle bande (F) s'étend sur toute la surface du toit du véhicule.
